# EUROPEAN PATENT SPECIFICATION

(11) **EP 3 841 935 B1**
(45) Date of publication and mention of the grant of the patent: **16.08.2023**
(21) Application number: 19383207.8
(22) Date of filing: 27.12.2019
(51) Int. Cl.: A47J 31/44

(54) **SYSTEM AND METHOD FOR FOAMING MILK**
SYSTEM UND VERFAHREN ZUM AUFSCHÄUMEN VON MILCH
SYSTÈME ET PROCÉDÉ DE MOUSSAGE DU LAIT

(43) Date of publication of application: 30.06.2021
(73) Proprietor: Azkoyen, S.A., 31350 Peralta Navarra (ES)
(72) Inventor: LOPEZ RUIZ, Jose, Maria, 31350 PERALTA (Navarra) (ES); LUMBIER MOLERES, Luis, María, 31350 PERALTA (Navarra) (ES); FURRER, Florian, 8004 ZÜRICH (CH); STAHL, Stefan, 8046 ZÜRICH (CH)
(74) Representative: Herrero & Asociados, S.L.

(56) References cited:
- EP-A1- 3 040 000
- US-A1- 2010 075 007
- US-A1- 2014 299 001

## Description

The present invention relates to a system for foaming milk, which can be applied, in particular, to a coffee dispensing machine or a milk foaming machine.

### Background of the invention

Milk foam is achieved by mixing milk and air. Depending on the volume percentage of air in the milk, a milk foam that is more or less dense is achieved. Thus, when the percentage of air is 20 %, for example, when the foam is poured into a glass, a dividing line is observed between the liquid phase and the foam phase. This dividing line is more evident when coffee is poured: the foam phase staying white and the liquid phase being coloured.

The properties of this mixture remain more or less constant when increasing the percentage of air in the milk, up to approximately 70 %. This type of foam is known the best.

When the percentage of the air exceeds 75 % of the total volume of the mixture, a milk foam-gel is obtained characterised in that:
- The foam has very fine bubbles: the texture of the surface of the foam seems smooth to the naked eye.
- The foam is not very dense (> 75 % air).
- The foam modifies the texture thereof until it becomes a gel, with a molecular texture close to being solid. This gel texture is observed since it is able to generate a small "mountain" when it flows, i.e. the structure thereof is sufficiently rigid so as to support the weight thereof.

Another aspect that indicates that the foam has reached the gel phase is that when it is collected with a spoon, the foam is able to maintain its shape without being crushed under its own weight.

The foam, due to the air-bubble structure thereof, behaves as a thermal insulation material, helping to keep the liquid on which it floats hotter.

When the amount of air exceeds 90 % of the volume of the mixture, the milk foam is not able to maintain the structure thereof and a mixture with small and large bubbles is produced, i.e. the texture thereof ceases to be homogeneous to the naked eye.

The outflow of this type of foam in the cup is not homogeneous, but rather interruptions and discontinuities are observed.

In the state of the art, systems for producing foamed fresh milk are known which require the fluid to be mixed with steam.

This implies having a steam production system, usually a pressure boiler, and the steam, which is hotter than 100 °C, can cause burns when handled.

Furthermore, the steam is able to be compressed, and when it is heated, it increases in volume or pressure, depending on the container it is in, which implies that the system must be subject to specific safety measures and regular inspections.

EP3040000A1 discloses a method and an apparatus for preparing and dispensing cold and hot foamed milk, wherein the hot or cold foamed milk is dispensed selectively along an outlet duct connected to the delivery of a pump and ending with a dispensing outlet through an electronic control for introducing steam into the outlet duct in a flowthrough heater arranged on the outlet duct.

US2014299001A1 discloses a system for preparing milk and milk foam in drinks machines, such as coffee machines and similar pieces of equipment, which are provided with a heater unit for heating the milk and/or the milk foam with steam. The system contains a feed for the milk and/or the milk foam and a separate feed for the steam, which is fed directly, as a heat-transfer medium, into the milk and/or the milk foam in the heater unit, which operates as an injector.

US2010075007A1 discloses a method and an apparatus for the production of milk foam or milk-based drinks. During the method for the production of milk foam or milk-based drinks, milk is sucked with a pump out of a container and conveyed to an outlet, wherein air and/or a gas is added to the milk. The milk/air mixture is processed in a cold state into milk foam and conveyed as cold milk foam to the outlet.

### Description of the invention

Therefore, one objective of the present invention is to provide a system for foaming milk that does not require the milk to be heated, with the advantages that this entails.

The mentioned drawbacks are resolved with the system for foaming milk of the invention, while presenting other advantages which will be described below.

The present invention relates to a system for foaming milk according to claim 1, comprising:
- a milk container;
- an air inlet;
- a pump, wherein the milk is mixed with the air in order to produce foamed milk; and
- an outlet, wherein foamed milk is supplied,
wherein the system for foaming milk further comprises means for regulating the pressure at which the mixing of the milk and the air is performed.

Said means for regulating the pressure at which the mixing of the milk and the air is performed comprises a throttle arranged at the outlet of said pump.

According to an embodiment which does not fall within the scope of the invention and present for illustration purposes only, said means for regulating the pressure at which the mixing of the milk and the air is performed comprise a regulator for supplying voltage to said pump.

Said means for regulating the pressure at which the mixing of the milk and the air is performed comprises a valve arranged after said pump.

Said valve is a pulse-modulated valve, and said pump is preferably a gear pump.

If the foamed milk is to be heated, the system for foaming milk according to the present invention may further comprise a heater arranged before said outlet for foamed milk. It should be noted, however, that this heater is not essential, unlike the systems for foaming milk known in the state of the art, wherein the mixing of the milk and the air is performed while hot. In this case, the already-foamed milk is simply heated.

A method for foaming milk, not according to the invention and present for illustration purposes only, using the system according to the present invention may comprise the following steps:
- feeding milk;
- feeding air;
- mixing the milk with the air in order to produce foamed milk; and
- supplying foamed milk,
and which further comprises the step of regulating the pressure at which the mixing of the milk and the air is performed.

According to one example, said step of regulating the pressure at which the mixing of the milk and the air is performed is performed by regulating the supply voltage of a pump wherein the milk is mixed with the air.

According to another example, said step of regulating the pressure at which the mixing of the milk and the air is performed is performed by regulating the outflow of foamed milk.

Advantageously, the fed air is air at room temperature that should not be heated before being mixed with the milk.

Preferably, the pressure at which the mixing of the milk and the air is performed is higher than 0.3 MPa.

If desired, the method for foaming milk may further comprise a step of heating the foamed milk.

The foamed milk is made by mixing a certain amount of air and milk, and by varying the suction capacity of the pump (varying the supply voltage thereof), the inlet mixture of air and milk is varied, for which reason the texture of the foamed milk is adjusted. At a lower supply voltage of the pump, it is achieved that the percentage of air in the mixture is greater and, for this reason, it has a higher degree of foaming.

With the system for foaming milk according to the present invention, the following advantages are achieved, among others:
- It is not necessary to heat the milk, such that the heater is optional;
- It is not necessary to use steam (neither for heating nor for foaming);
- Other existing, known systems are able to be reduced and simplified by using fewer components;
- A stable and robust system for foaming milk with a "gel" effect is achieved;
- The foam does not depend on the quality of the milk, only the presence of proteins (mainly caseins) is necessary; therefore, the system is valid for the different types of liquid milk existing on the market (pasteurised, UHT, skimmed, semi-skimmed, whole, lactose-free), etc.);
- Thanks to this system, product quality in the cup (gel-type foam) that is clearly differentiated from other systems for foaming milk is achieved (texture, flavour, visual effect during the production and temperature).

### Brief description of the drawings

To better understand what has been set forth, several drawings are attached in which a practical embodiment is schematically depicted merely by way of nonlimiting example.

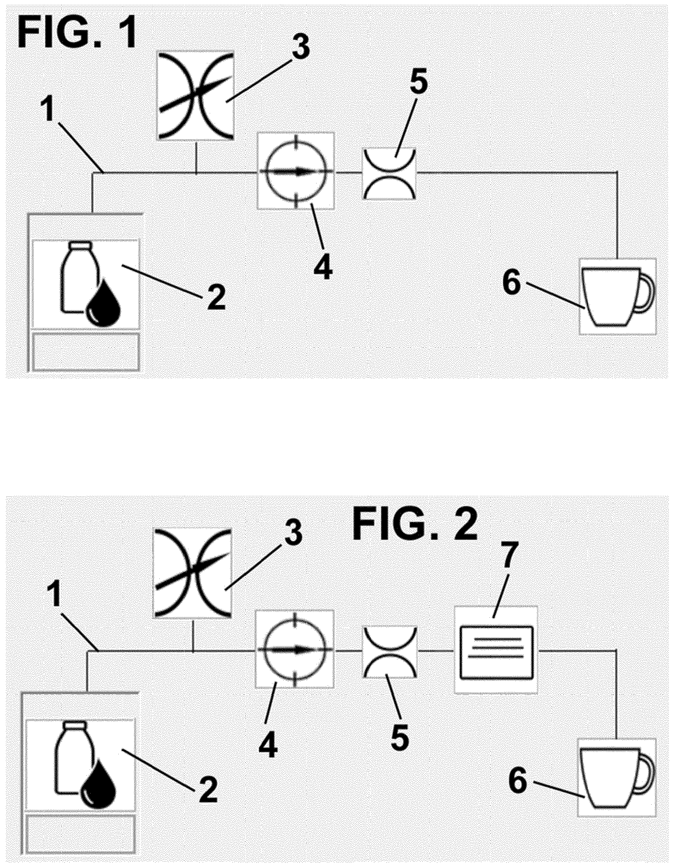

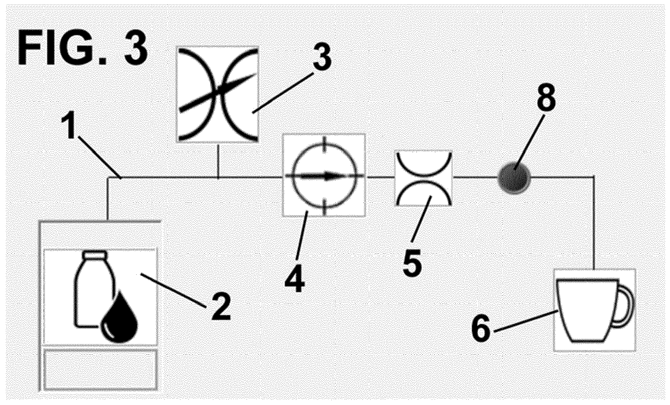

Figures 1 to 3 are block diagrams showing the components of the system for foaming milk, figures 1 and 2 showing examples not forming part of the present invention, and figure 3 showing the system according to the present invention.

### Description of preferred embodiments

Figure 1 shows a first example of the system for foaming milk not forming part of the present invention.

According to this example, the system comprises a circuit 1 which starts in a milk container 2 from which milk is fed to the circuit 1. Furthermore, the system for foaming milk further comprises an air inlet 3, which feeds air to the circuit 1 for the mixing thereof with the milk, a pump 4, wherein the mixing of the milk and the air is produced, a throttle 5 located in the outlet of the pump 4, and an outlet 6, wherein the foamed milk is provided, for example, to a cup.

The operations of the system for foaming milk according to the present example are as follows:
The liquid milk and the air are sucked in by the hydraulic pump 4. Said mixture of milk and air is preferably mixed thanks to internal gears of the hydraulic pump 4.

Due to the fact that a throttle 5 is arranged at the outlet of the pump 4, the pressure at the outlet of the pump 4 increases, for example, higher than 0.3 MPa, in order to overcome the restriction on the flow. This causes the mixture of air and milk to be produced at a high pressure, making the foam production have a gel-like appearance.

Immediately after the throttle 5, the mixture of milk and air expands once again inside the circuit 1, producing a flow of milk foam-gel in the outlet 6.

The system produces gel-type foamed milk in a stable manner when the mixing is performed at a high pressure inside the pump 4, the throttle 5 being located immediately at the outlet of the pump 4.

From a physico-chemical point of view, milk foam is a colloid formed by air, water and the proteins of the milk (mainly caseins). This implies that the production of foamed milk is performed with any type of milk (skimmed, semi-skimmed, whole, lactose-free, etc.) as long as the amount of protein is suitable (between 1 % and 6 %).

As indicated, performing a correct mixture of foamed milk-gel is achieved when it is produced at a pressure higher than 0.3 MPa.

By varying the pressure at which the mixture is produced, it is possible to adjust the texture of the milk foam, giving it more or less consistency.

This can be achieved by varying the supply voltage of the pump 4 by means of a voltage regulator, which implies a variation in the power and, therefore, a variation in the pressure at which the mixture is performed.

Figure 2 shows a second example of the system for foaming milk not forming part of the present invention. For simplicity, the description of elements in common with the previous example will not be repeated.

As seen in the example described previously, the foaming system does not comprise any heaters, such that the production of the milk foam does not need to heat any of the fluids, for which reason the outlet temperature of the milk foam at the outlet 6 will be the temperature of the milk at the inlet.

However, if hot milk foam is to be obtained, it is best for it to be heated after being produced in order to maintain the density and texture.

To do so, a heater 7, such as a heat exchanger, is incorporated between the throttle 5 and the outlet 6 to the cup.

Figure 3 shows an embodiment of the system for foaming milk according to the present invention. For simplicity, the description of elements in common with the first example will not be repeated.

Another manner of varying the pressure at which the mixture is performed and, therefore, varying the texture of the milk foam, is by introducing a valve 8 at the outlet controlled by pulse modulation. By varying the outlet of the milk, the outflow is able to be reduced and, therefore, the pump 4, when working at constant power, increases the pressure at which the mixing is performed.

Despite having referred to specific embodiments of the invention, it is evident for a person skilled in the art that the system for foaming milk which has been described is susceptible to a number of variations and modifications, and which all the mentioned details can be replaced with other technically equivalent ones without departing from the scope of protection defined by the attached claims.

## Claims

1. A system for foaming milk, comprising:
- a milk container (2);
- an air inlet (3);
- a pump (4), wherein the milk is mixed with the air in order to produce foamed milk; and
- an outlet (6), wherein foamed milk is supplied,
the system for foaming milk further comprising means (5, 8) for regulating the pressure at which the mixing of the milk and the air is performed,
**characterized in that** said means for regulating the pressure at which the mixing of the milk and the air is performed comprise a throttle (5) arranged at the outlet of said pump (4) and a pulse-modulated valve (8) arranged after said pump (4).

2. The system for foaming milk according to claim 1, wherein said pump (4) is a gear pump.

3. The system for foaming milk according to claim 1, which further comprises a heater (7) arranged before said outlet (6) for foamed milk.

## Patentansprüche

1. Ein System zum Aufschäumen von Milch, umfassend:
- einen Milchbehälter (2);
- einen Lufteinlass (3);
- eine Pumpe (4), in der die Milch mit der Luft gemischt wird, um aufgeschäumte Milch zu erzeugen;
und
- einen Auslass (6), an dem die aufgeschäumte Milch bereitgestellt wird,
das System zum Aufschäumen von Milch außerdem umfassend Mittel (5, 8) zur Regulierung des Drucks, bei dem das Mischen der Milch und der Luft durchgeführt wird,
**dadurch gekennzeichnet, dass** besagte Mittel zur Regulierung des Drucks, bei dem das Mischen der Milch und der Luft erfolgt, eine Drossel (5), die am Auslass der Pumpe (4) angeordnet ist, und ein pulsmoduliertes Ventil (8), das hinter der Pumpe (4) angeordnet ist, umfassen.

2. Das System zum Aufschäumen von Milch nach Anspruch 1, wobei besagte Pumpe (4) eine Zahnradpumpe ist.

3. Das System zum Aufschäumen von Milch nach Anspruch 1, das außerdem eine Heizung (7) umfasst, die vor dem Auslass (6) für aufgeschäumte Milch angeordnet ist.

## Revendications

1. Système de moussage de lait comprenant :
- un contenant de lait (2),
- une entrée d'air (3),
- une pompe (4), le lait étant mélangé à l'air afin de produire du lait moussé, et
- une sortie (6), du lait moussé étant fourni,
le système de moussage de lait comprenant en outre des moyens (5, 8) pour régler la pression à laquelle le mélange de lait et d'air est fait,
**caractérisé en ce que** les moyens pour régler la pression à laquelle le mélange du lait et de l'air est fait, comprennent une manette (5) agencée à la sortie de la pompe (4) et une valve (8) modulée par impulsions agencée après la pompe (4).

2. Système de moussage de lait selon la revendication 1, la pompe (4) étant une pompe à engrenage.

3. Système de moussage de lait selon la revendication 1, qui comprend en outre un radiateur (7) agencé avant la sortie pour du lait moussé.
